# EUROPÄISCHE PATENTSCHRIFT

(11) **EP 0 735 299 B1**
(45) Veröffentlichungstag und Bekanntmachung des Hinweises auf die Patenterteilung: **03.11.1999**
(21) Anmeldenummer: 96103244.8
(22) Anmeldetag: 02.03.1996
(51) Int. Cl.: F16J 15/34

(54) **Gleitringdichtung**
Mechanical face seal
Garniture mécanique d'étanchéité

(30) Priorität: 30.03.1995 DE 19511708
(43) Veröffentlichungstag der Anmeldung: 02.10.1996
(73) Patentinhaber: Federal-Mogul Burscheid GmbH, 51399 Burscheid (DE)
(72) Erfinder: Zutz, Hans-Henning, Ing., 42929 Wermelskirchen (DE)

(56) Entgegenhaltungen:
- DE-A- 3 725 887
- DE-A- 3 836 717
- GB-A- 2 070 702

## Beschreibung

Die Erfindung betrifft eine Gleitringdichtung, insbesondere Lautwerkdichtung, bestehend aus einem Gleit- und einem Gegenring mit je einer zur Aufnahme eines elastischen Rollkörpers bestimmten kegeligen Umfangsfläche, wobei sich der Rollkörper im Einbauzustand zwischen der kegeligen Umfangsfläche und einer ebenfalls kegeligen, korrespondierenden Umfangsfläche eines Maschinenteiles erstreckt sowie einem dem Rollkörper vorgeschalteten Dichtkörper, welcher fest mit dem Gleit- und/oder Gegenring verbunden ist.

Das Anwendungsgebiet gattungsgemäßer Gleitringdichtungen findet sich dort, wo Betriebsbedingungen mit höchsten Verschleißbeanspruchungen herrschen. So werden beispielsweise Triebachsen von schweren Baumaschinen mit derartigen Sonderkonstruktionen von Gleitringdichtungen abgedichtet, da diese Maschinen hohem Verschleiß durch Staub, Sand, Schlamm oder Steine ausgesetzt sind.

Die Dichtung hat die unangenehme Eigenart, daß der Raum zwischen den Rollkörpern und dem Maschinenteil vollkommen mit Schmutz gefüllt wird. Bei Trocknung und Aushärtung wird auf diese Weise die Bewegungsfreiheit der Dichtung extrem behindert. Die eigentliche Federarbeit der Rollkörper kann dann nicht mehr funktionsrichtig ausgeübt werden, was zum vorzeitigen Versagen der Gleitringdichtung führen kann. Um dies zu verhindern, wurden gemäß DE-A-38 36 717 oder DE-A-3 725 887 zusätzliche Schutzkörper dem Rollkörper vorgeschaltet, die das Eindringen von Schmutz in den Bereich des Rollkörpers verhindern.
Der Nachteil dieser Konstruktion liegt darin, daß zum Einbau der Gleitringdichtung mehrere Einzelteile separat montiert werden müssen. Hinzu kommt, daß zum Einbau der Schutzkörper die aufnehmenden Maschinenteile entsprechend angepaßt werden müssen.

Der Erfindung liegt die Aufgabe zugrunde, eine gattungsgemäße Gleitringdichtung im Hinblick auf die Montierbarkeit der Gleitringdichtung zu verbessern, wobei gleichzeitig die Herstellungskosten gesenkt werden.

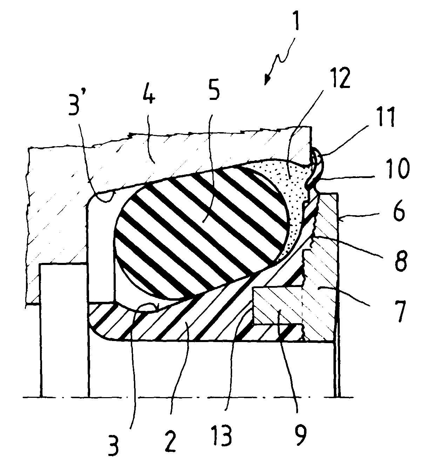

Diese Aufgabe ist erfindungsgemäß dadurch gelöst, daß die kegelige Umfangsfläche des Gleit- und/oder Gegenringes und der Dichtkörper aus Kunststoff bestehen und einstückig miteinander verbunden sind.
Auf diese Weise ist es möglich, diesen Dichtkörper gleichzeitig mit dem Gleit- und/oder Gegenring zu montieren Änderungen hinsichtlich des Einbauvolumens im Hinblick auf Gleitringdichtungen bisheriger Bauart brauchen am Maschinenteil nicht durchgeführt zu werden. Da das die Gleitringdichtung aufnehmende Maschinenteil zum Einbau der erfindungsgemäßen Gleitringdichtung nicht verändert werden muß, ist es möglich, bisherige Gleitringdichtungen gegen die neue Gleitringdichtung auszutauschen, ohne daß Mehrkosten entstehen.
Vorteilhafte Ausgestaltungen der Erfindung ergeben sich aus den Unteransprüchen. Die Erfindung ist in der Zeichnung anhand eines Ausführungsbeispieles dargestellt und wird im folgenden näher erläutert.

Die Figur zeigt einen Gleit- oder Gegenring (2) einer Gleitringdichtung (1). Die Gleitringdichtung (1) besteht aus zwei geometrisch gleichen Gleit- oder Gegenringen (2), so daß im folgenden nur noch von einem Gleitring (2), wie dargestellt, gesprochen wird. Der Gleitring (2) weist ein etwa L-förmiges Querschnittsprofil auf und ist im Bereich seiner äußeren Umfangsfläche (3) kegelig geformt. Das korrespondierende Maschinenteil (4) weist ebenfalls eine kegelige Umfangsfläche (3') auf. Radial zwischen den kegeligen Umfangsflächen (3,3') erstreckt sich unter Vorspannung ein elastischer Rollkörper (5). Die dem Rollkörper (5) aufgezwungene Spannung bewirkt, daß der Gleitring (2) gegen einen spiegelsymmetrisch angeordneten (nicht dargestellt) Gegenring gepreßt wird. Der Gleitring (2) besteht erfindungsgemäß aus einem Verbundkörper, wobei die den Rollkörper (5) aufnehmende Umfangsfläche (3) aus Kunststoff besteht und die Gleitfläche (6) des Gleitringes (2) von einem Metallkörper (7) erzeugt wird. Zur besseren Verklammerung des Metallkörpers (7) mit dem Kunststoff weist der Metallkörper (7) auf seiner Ruckseite ein definiertes Rauhigkeitsprofil (8) auf Als Verdrehsicherung dient eine Ausnehmung (13) im Kunststoffkörper, in welcher sich ein Vorsprung (9) des Metallkörpers (7) erstreckt. Über den Umfang können mehrere Vorsprünge (9) gleichmäßig verteilt angeordnet sein.

Alternativ besteht die Möglichkeit, den Metallkörper (7) in eine Kunststoffspritzgießform (nicht dargestellt) einzulegen und darin den Kunststoffkörper anzuspritzen.

Um den Rollkörper (5) vor von außen eindringendem Schmutz zu schützen, ist am Endbereich der Umfangsfläche (3) ein Dichtkörper (10) einstückig aus dem Kunststoffkörper herausgeformt. Eine Dichtlippe (11) liegt im Einbauzustand an einer Fläche des Maschinenteils (4) dichtend an. Es ist ohne weiteres möglich, den Raum zwischen Rollkörper (5) und Dichtkörper (10) mit Fett (12) aufzufüllen, um so einen zusätzlichen Schutz gegen eindringenden Schmutz zu erzeugen.

## Patentansprüche

1. Gleitringdichtung, insbesondere Laufwerkdichtung, bestehend aus einem Gleit- und einem Gegenring (2) mit je einer zur Aufnahme eines elastischen Rollkörpers (5) bestimmten kegeligen Umfangsfläche (3), wobei sich der Rollkörper im Einbauzustand zwischen der kegeligen Umfangsfläche und einer ebenfalls kegeligen, korrespondierenden Umfangsfläche (3') eines Maschinenteils (4) erstreckt, sowie einen dem Rollkörper vorgeschalteten Dichtkörper (10), welcher mit dem Gleit- und/oder Gegenring (2) verbunden ist, dadurch gekennzeichnet, daß die kegelige Umfangsfläche (3) des Gleit- und/oder Gegenringes (2) und der Dichtkörper (10) aus Kunststoff bestehen und einstückig miteinander verbunden sind.

2. Gleitringdichtungen nach Anspruch 1, dadurch gekennzeichnet, daß der Dichtkörper (10) am Endbereich der Umfangsfläche (3) sich erstreckt und als Dichtlippe (11) ausgebildet ist.

3. Gleitringdichtung nach den Ansprüche 1 und 2, dadurch gekennzeichnet, daß der Gleit- und/oder Gegenring (2) als Verbundkörper ausgebildet ist, bei dem als Gleitfläche (6) ein verschleißfester Metallkörper (7) vorgesehen ist.

4. Gleitringdichtung nach Anspruch 3, dadurch gekennzeichnet, daß der Metallkörper (7) einen Vorsprung (9) aufweist, der sich in einer Ausnehmung (13) des Kunststoffkörpers erstreckt.

5. Gleitringdichtung nach den Ansprüchen 3 und 4, dadurch gekennzeichnet, daß die Verbindungsfläche zwischen Metall- (7) und Kunststoffkörper ein definiertes Rauhigkeitsprofil (8) aufweist.

6. Verfahren zur Herstellung einer Gleitringdichtung nach Anspruch 3, dadurch gekennzeichnet, daß der Metallkörper (7) in eine Kunststoffspritzgießform eingelegt und anschließend die den Rollkörper (5) aufnehmende Umfangsfläche (3) zusammen mit der Dichtlippe (11) angeformt wird.

## Claims

1. Mechanical face seal, especially a running gear seal, comprising a sliding ring and a counter-ring (2), each having a conical circumferential face (3) intended for receiving an elastic roller (5), the roller extending in its assembled state between the conical circumferential face and a likewise conical corresponding circumferential face (3') of a machine part (4) and also comprising a sealing body (10) which is disposed on top of the roller and is securely attached to the sliding and/or counter-ring (2), characterised in that the conical circumferential face (3) of the sliding and/or the counter-ring (2) and the sealing body (10) are made of plastic material and connected together integrally.

2. Mechanical face seals according to claim 1, characterised in that the sealing body (10) extends at the end region of the circumferential face (3) and is configured as a sealing lip (11).

3. Mechanical face seal according to claims 1 and 2, characterised in that the sliding and/or counter-ring (2) is configured as a composite body in which a wear-resistant metal body (7) is provided as sliding surface (6).

4. Mechanical face seal according to claim 3, characterised in that the metal body (7) has a projection (9) which extends in a recess (13) of the plastic body.

5. Mechanical face seal according to claims 3 and 4, characterised in that connecting surface between the metal body (7) and the plastic body has a defined roughness profile (8).

6. Method for the production of a mechanical face seal according to claim 3, characterised in that the metal body (7) is inserted into a plastic injection mould and subsequently the circumferential face (3) receiving the roller (5) is moulded on together with the sealing lip (11).

## Revendications

1. Garniture mécanique d'étanchéité, en particulier garniture d'étanchéité de mécanisme de roulement, comprenant un anneau de glissement et un contre-anneau (2) ayant chacun une surface périphérique conique (3) adaptée à la réception d'un corps de roulement élastique (5), le corps de roulement s'étendant à l'état monté entre la surface périphénque conique et une surface périphérique correspondante (3') également conique d'une pièce de machine (4), ainsi qu'un corps d'étanchéité (10) monté devant le corps de roulement, ledit corps (10) étant relié à l'anneau de glissement et/ou le contre-anneau (2), caractérisé en ce que la surface périphérique conique (3) de l'anneau de glissement et/ou du contre-anneau (2) et le corps d'étanchéité (10) sont constitués d'un matériau plastique et reliés l'un à l'autre de manière monobloc.

2. Garniture mécanique d'étanchéité selon la revendication 1, caractérisée en ce que le corps d'étanchéité (10) s'étend au niveau de la zone d'extrémité de la surface périphérique (3) et est réalisée sous la forme d'une lèvre d'étanchéité (11).

3. Garniture mécanique d'étanchéité selon les revendications 1 et 2, caractérisée en ce que l'anneau de glissement et/ou le contre-anneau (2) est réalisé sous la forme d'un corps composite, dans lequel un corps métallique résistant à l'usure (7) est prévu en tant que surface de glissement (6).

4. Garniture mécanique d'étanchéité selon la revendication 3, caractérisée en ce que le corps métallique (7) présente une projection (9) qui s'étend dans un évidement (13) du corps en matière plastique.

5. Garniture mécanique d'étanchéité selon les revendications 3 et 4, caractérisée en ce que la surface de liaison entre le corps métallique (7) et le corps en matière plastique comprend un profil de rugosité défini (8).

6. Procédé pour la fabrication d'une garniture mécanique d'étanchéité selon la revendication 3, caracténsé en ce que le corps métallique (7) est disposé dans un moule d'injection de matière plastique et qu'ensuite la surface périphérique recevant le corps de roulement (5) est formé ensemble avec la lèvre d'étanchéité (11).
